# EUROPÄISCHE PATENTANMELDUNG

(11) **EP 4 292 854 A1**
(43) Veröffentlichungstag der Anmeldung: **20.12.2023**
(21) Anmeldenummer: 23177241.9
(22) Anmeldetag: 05.06.2023
(51) Int. Cl.: B60K 17/04, B60K 1/02, B62D 11/04

(54) **ELEKTRISCH ANTREIBBARE ANTRIEBSACHSE FÜR EIN GELÄNDEGÄNGIGES NUTZFAHRZEUG UND NUTZFAHRZEUG**

(30) Priorität: 13.06.2022 DE 102022205958
(71) Anmelder: ZF Friedrichshafen AG, 88046 Friedrichshafen (DE)
(72) Erfinder: Winkler, Maximilian, 94508 Schöllnach (DE); Mühlbauer, Alexander, 94575 Windorf (DE); Reitinger, Franz, 4092 Esternberg (AT); Auburger, Johannes, 93128 Regenstauf (DE); Felbinger, Florian, 34127 Kassel (DE); Solka, Ulrich, 94081 Fuerstenzell (DE); Rometsch, Willi, 34127 Kassel (DE); Frisch, Hendrik, 34127 Kassel (DE)
(74) Vertreter: ZF Friedrichshafen AG

(57) **Zusammenfassung**

Die Erfindung betrifft eine elektrisch antreibbare Antriebsachse (19) für ein geländegängiges Nutzfahrzeug, umfassend einen ersten Antriebsstrang (20) mit einem ersten Elektromotor (21), einem ersten Getriebe (22) und einem ersten Abtrieb (23) sowie einen zweiten Antriebsstrang (30) mit einem zweiten Elektromotor (31), einem zweiten Getriebe (32) und einem zweiten Abtrieb (33), wobei der erste Antriebsstrang (20) und der zweite Antriebsstrang (30) in einem gemeinsamen Gehäuse (40) und/oder an dem gemeinsamen Gehäuse (40) angeordnet sind und wobei der erste Antriebsstrang (20) einen ersten Momentenpfad bildet und der zweite Antriebsstrang (30) einen zweiten Momentenpfad bildet. Die erfindungsgemäße Antriebsachse (10) zeichnet sich dadurch aus, dass der erste Momentenpfad und der zweite Momentenpfad mechanisch voneinander getrennt sind. Die Erfindung betrifft weiterhin ein entsprechendes Fahrzeug.

## Beschreibung

Die vorliegende Erfindung betrifft eine elektrisch antreibbare Antriebsachse für ein geländegängiges Nutzfahrzeug gemäß dem Oberbegriff von Anspruch 1 sowie ein entsprechendes Nutzfahrzeug.

Im Stand der Technik sind unterschiedliche Gattungen von elektrisch angetriebenen und geländegängigen Nutzfahrzeugen, wie etwa Radlader, LKW, Minenfahrzeuge oder Radpanzer bekannt. Diese elektrisch angetriebenen Nutzfahrzeuge sind entweder rein elektrisch angetrieben, d.h. sie verfügen für ihre Energieversorgung ausschließlich über eine elektrische Batterie bzw. einen elektrischen Akkumulator, oder aber sie sind diesel-elektrisch angetrieben, was bedeutet, dass die benötigte Energie von einem dieselgetriebenen Generator, üblicherweise in Verbindung mit einem elektrischen Pufferspeicher, wie z.B. einem entsprechend dimensionierten Kondensator, bereitgestellt wird. In allen Fällen wird die für den Fahrantrieb bzw. den Arbeitsantrieb benötigte mechanische Leistung von einem oder mehreren Elektromotoren erbracht.

In diesem Zusammenhang ist aus der DE 10 2018 206 411 A1 ein Antriebsstrang für eine Arbeitsmaschine bekannt, der eine Vorderachse mit einer elektrischen Vorderachsantriebseinheit und eine Hinterachse mit einer elektrischen Hinterachsantriebseinheit aufweist. Weiterhin weist der Antriebsstrang eine schaltbare Kupplung auf, welche die Vorderachsantriebseinheit mit der Hinterachsantriebseinheit triebverbinden kann.

Aus der DE 10 2016 006 208 A1 geht eine Antriebseinrichtung für einen Kraftfahrzeugantriebsstrang hervor, welche für ein Elektrofahrzeug in Form eines Nutzfahrzeugs ausgestaltet ist. Diese Antriebseinrichtung umfasst dabei bei einer Variante zwei Elektromaschinen, denen ein Getriebe nachgeschaltet ist. Bei dem Getriebe können dabei unterschiedliche Übersetzungsverhältnisse geschaltet werden, um eine oder beide Elektromaschinen mit einer Ausgangsseite des Getriebes zu koppeln. Dabei ist die Ausgangsseite mit mindestens einem Abtrieb gekoppelt, an dem innerhalb des Kraftfahrzeugantriebsstrangs je eine Antriebsachse des Elektrofahrzeuges angebunden ist.

Die bekannten elektrisch betreibbaren Antriebsstränge sind jedoch dahingehend nachteilig, als dass sie stets eine mechanische Kopplung zumindest der Abtriebsseiten einer Achse aufweisen, was die Möglichkeiten der Momentenverteilung zwischen den Antriebsmotoren und den Rädern beschränkt. Zudem sind sie hinsichtlich ihrer Funktionalitäten nur wenig oder gar nicht integriert. Weiterhin ermöglichen die bisher bekannten, kompakten Antriebsachsen keine mehrstufige Schaltung in getrennten Momentenpfaden.

Es ist eine Aufgabe der Erfindung, eine verbesserte elektrisch antreibbare Antriebsachse vorzuschlagen.

Diese Aufgabe wird erfindungsgemäß durch die elektrisch antreibbare Antriebsachse gemäß Anspruch 1 gelöst. Vorteilhafte Ausgestaltungen und Weiterbildungen der Erfindung gehen aus den abhängigen Ansprüchen hervor.

Die Erfindung betrifft eine elektrisch antreibbare Antriebsachse für ein geländegängiges Nutzfahrzeug, umfassend einen ersten Antriebsstrang mit einem ersten Elektromotor, einem ersten Getriebe und einem ersten Abtrieb sowie einen zweiten Antriebsstrang mit einem zweiten Elektromotor, einem zweiten Getriebe und einem zweiten Abtrieb, wobei der erste Antriebsstrang und der zweite Antriebsstrang in einem gemeinsamen Gehäuse und/oder an dem gemeinsamen Gehäuse angeordnet sind und wobei der erste Antriebsstrang einen ersten Momentenpfad bildet und der zweite Antriebsstrang einen zweiten Momentenpfad bildet. Die erfindungsgemäße Antriebsachse zeichnet sich dadurch aus, dass der erste Momentenpfad und der zweite Momentenpfad mechanisch voneinander getrennt sind.

Die Erfindung beschreibt also eine elektrisch betreibbare bzw. antreibbare Antriebsachse. Die Antriebsachse ist insbesondere dazu ausgebildet, ein geländegängiges Nutzfahrzeug, wie beispielsweise einen Kran, einen Radpanzer oder einen allradgetriebenen LKW anzutreiben. Die Verwendung in einem Nutzfahrzeug setzt voraus, dass die Antriebsachse zum Dauerbetrieb mit im Vergleich zu einem PKW-Betrieb oder auch einem straßengebundenen LKW-Betrieb sehr hohen absoluten und relativen Leistungen ausgelegt sein muss. Beispielsweise muss die erfindungsgemäße Antriebsachse dazu ausgelegt sein, über vergleichsweise große zusammenhängende Zeiträume mehr als 50 % bzw. mehr als 75 % ihrer Maximalleistung bereitzustellen. Eine elektrisch antreibbare Antriebsachse eines PKW wäre hierzu beispielsweise nicht geeignet.

Die erfindungsgemäße Antriebsachse umfasst einen ersten Antriebsstrang und einen zweiten Antriebsstrang, wobei der erste Antriebsstrang seinerseits einen ersten Elektromotor, ein erstes Getriebe und einen ersten Abtrieb umfasst und wobei der zweite Antriebsstrang seinerseits einen zweiten Elektromotor, ein zweites Getriebe und einen zweiten Abtrieb umfasst.

Vorzugsweise sind der erste Elektromotor und der zweite Elektromotor baugleich ausgebildet, es handelt sich vorzugsweise also um identische Elektromotoren.

Der erste und der zweite Elektromotor können jeweils als Synchron- oder als Asynchronmaschine ausgebildet sein, insbesondere als dreiphasige Synchron- oder als dreiphasige Asynchronmaschinen.

Dem ersten und dem zweiten Elektromotor ist vorteilhaft jeweils ein Inverter zugeordnet, der elektrischen Gleichstrom, welcher vorzugsweise von einer elektrischen Batterie bereitgestellt wird, in zur Ansteuerung bzw. zum Betrieb des ersten bzw. zweiten Elektromotors geeigneten Wechselstrom umrichtet.

Vorzugsweise sind auch das erste und das zweite Getriebe baugleich ausgebildet, so dass es sich auch hier vorzugsweise also um identische Getriebe handelt, insbesondere hinsichtlich der erzielten Übersetzung.

Das erste und das zweite Getriebe sind bevorzugt als Untersetzungsgetriebe ausgebildet. Das erste und das zweite Getriebe können jeweils mehrere Getriebestufen umfassen.

Der erste Abtrieb und der zweite Abtrieb sind vorteilhaft als Radabtriebe ausgebildet und beispielsweise jeweils als Abtriebswelle mit einer Radnabe zur Montage eines Rads ausgebildet. Alternativ bevorzugt sind der erste Abtrieb und der zweite Abtrieb ausschließlich als erste und zweite Abtriebswelle ausgebildet, wobei die erste und zweite Abtriebswelle beispielsweise jeweils mit einer Kardanwelle triebverbunden werden können, so dass die Kardanwellen von der ersten und zweiten Abtriebswelle angetrieben werden.

Weiterhin umfasst die erfindungsgemäße Antriebsachse ein gemeinsames Gehäuse, welches den ersten Antriebsstrang, d.h. den ersten Elektromotor, das erste Getriebe und den ersten Abtrieb, und den zweiten Antriebsstrang, d.h. den zweiten Elektromotor, das zweite Getriebe und den zweiten Abtrieb, ganz oder teilweise einhaust. Zumindest das erste Getriebe und das zweite Getriebe sind dabei vorteilhaft innerhalb des gemeinsamen Gehäuses angeordnet. Der erste und der zweite Abtrieb können teilweise im Gehäuse angeordnet sein und sich teilweise aus dem Gehäuse nach außen erstrecken, beispielsweise können sich axiale Enden der Abtriebswellen mit den Radnaben nach außen erstrecken. Der erste und der zweite Elektromotor können entweder vollständig im Gehäuse angeordnet sein oder außerhalb des Gehäuses am Gehäuse angeordnet sein.

Eine Anordnung des ersten und des zweiten Elektromotors im Gehäuse führt dabei zu dem Vorteil, dass der erste und der zweite Elektromotor beispielsweise an einen im Gehäuse angeordneten Kühl- und Schmierhaushalt angeschlossen werden können.

Eine Anordnung des ersten und des zweiten Elektromotors am Gehäuse außerhalb des Gehäuses ermöglicht hingegen eine vergleichsweise flexible Anordnung der Elektromotoren und ggf. eine besser Ausnutzung des vorhandenen Bauraums. Beispielsweise können der erste und der zweite Elektromotor direkt am Gehäuse angeordnet werden oder über einen Verbindungswelle am Gehäuse angeordnet werden, insbesondere über eine Kardanwelle.

Der erste Antriebsstrang bildet einen ersten Momentenpfad, wobei der erste Momentenpfad vom ersten Elektromotor über das erste Getriebe zum ersten Abtrieb verläuft. Ebenso bildet der zweite Antriebsstrang einen zweiten Momentenpfad, wobei der zweite Momentenpfad vom zweiten Elektromotor über das zweite Getriebe zum zweiten Abtrieb verläuft.

Erfindungsgemäß ist es nun vorgesehen, dass der erste Momentenpfad und der zweite Momentenpfad mechanisch voneinander getrennt sind. Das bedeutet, dass keinerlei mechanische Verbindung zur Übertragung von Antriebsleistung zwischen dem ersten Antriebsstrang und dem zweiten Antriebsstrang besteht, insbesondere auch nicht über eine trennbare Kupplung oder ein Differenzial.

Dadurch ergibt sich der Vorteil, dass der erste Abtrieb und der zweite Abtrieb vollkommen unabhängig voneinander gesteuert werden können. Beispielsweise können sie mit unterschiedlichen Drehzahlen zur Unterstützung einer Kurvenfahrt betrieben werden oder sogar mir entgegengerichteten Drehrichtungen.

Dieser flexible Betrieb der erfindungsgemäßen Antriebsachse ermöglicht es vorteilhaft auch, zwei oder mehr erfindungsgemäße Antriebsachsen zum Antrieb eines Fahrzeugs heranzuziehen, beispielsweise für ein 4x2-Fahrzeug bis hin zu einem 10x10-Fahrzeug. Eine mechanische Kopplung der erfindungsgemäßen Antriebsachsen ist dabei nicht erforderlich, im Gegenteil würde eine mechanische Kopplung gerade die Flexibilität der Antriebsachse zunichte machen.

Durch den Entfall von Kopplungselementen zwischen dem ersten Antriebsstrang und dem zweiten Antriebsstrang ergibt sich zudem ein vergleichsweise kompakter Aufbau.

Im Gegensatz zu klassischen Achsantrieben weist die erfindungsgemäße Antriebsachse also keine mechanische Kopplung der Abtriebe auf und ist dafür vergleichsweise kompaktbauend.

Die Erfindung kombiniert somit im klassischen Sinne ein Achs- bzw. Verteilergetriebe mit einem Automatikgetriebe.

Die Antriebsachse kann beispielsweise als nicht lenkbare und dadurch kostengünstige und besonders kompakte Antriebsachse ausgebildet sein.

Gemäß einer bevorzugten Ausführungsform der Erfindung ist es vorgesehen, dass das erste Getriebe eine erste Stirnradstufe, eine erste Kegelradstufe und einen ersten Planetensatz umfasst und dass das zweite Getriebe eine zweite Stirnradstufe, eine zweite Kegelradstufe und einen zweiten Planetensatz umfasst.

Der erste Momentenpfad im ersten Getriebe verläuft dabei vorteilhaft von der ersten Stirnradstufe über die erste Kegelradstufe und den ersten Planetensatz zum ersten Abtrieb. Ebenso verläuft der zweite Momentenpfad im zweiten Getriebe vorteilhaft von der zweiten Stirnradstufe über die zweite Kegelradstufe und den zweiten Planetensatz zum zweiten Abtrieb. Indem der erste bzw. zweite Planetensatz die jeweils letzte Stufe im Momentenpfad des ersten bzw. zweiten Getriebes darstellt, erfolgt jeweils die letzte Drehmomenterhöhung am Getriebeausgang, was zu einer Reduzierung der mechanischen Belastung der dem ersten bzw. zweiten Planetensatz im ersten bzw. zweiten Momentenpfad vorausgehenden Komponenten führt.

Gemäß einer besonders bevorzugten Ausführungsform der Erfindung ist es vorgesehen, dass mittels der ersten Stirnradstufe ein erster Höhenversatz des ersten Elektromotors gegenüber dem ersten Abtrieb hergestellt ist und dass mittels der zweiten Stirnradstufe ein zweiter Höhenversatz des zweiten Elektromotors gegenüber dem zweiten Abtrieb hergestellt ist. Da die erste Stirnradstufe die Eingangsstufe des ersten Getriebes ist und die zweite Stirnradstufe entsprechend die Eingangsstufe des zweiten Getriebes ist, steht sie direkt bzw. indirekt über eine Kupplung mit dem ersten Elektromotor bzw. mit dem zweiten Elektromotor in Triebverbindung. Indem nun eine Achse eines Eingangsstirnrads der ersten Stirnradstufe bzw. der zweiten Stirnradstufe vergleichsweise höher angeordnet ist als eine Achse eines Ausgangsstirnrads der ersten Stirnradstufe bzw. der zweiten Stirnradstufe, kann auch der erste bzw. zweite Elektromotor vergleichsweise höher am gemeinsamen Gehäuse angeordnet werden. Somit wird der Freigang des ersten bzw. zweiten Elektromotors nach unten erhöht, was beispielsweise einen größeren Durchmesser bei kürzerer Bauweise des ersten bzw. zweiten Elektromotors ermöglicht.

Gemäß einer weiteren besonders bevorzugten Ausführungsform der Erfindung ist es vorgesehen, dass der erste Planetensatz mehrstufig ausgebildet ist und dass der zweite Planetensatz mehrstufig ausgebildet ist. Daraus ergibt sich der Vorteil, dass jeweils unterschiedliche Übersetzungsstufen darstellbar sind, so dass die Antriebsleistung des ersten bzw. zweiten Elektromotors nach Bedarf in eine hohe Drehzahl oder ein hohes Moment gewandelt werden kann, was die Verwendungsmöglichkeiten und somit den Nutzwert der Antriebsachse steigert. Beispielsweise kann eine Übersetzungsstufe für Straßenfahrt und weitere Übersetzungsstufen für unterschiedlich schwergängiges Gelände vorgesehen sein. Somit können auch unterschiedliche Fahrmanöver in unterschiedlichen Geländearten erfolgen.

Vorteilhaft ist der erste Planetensatz unabhängig vom zweiten Planetensatz schaltbar, so dass der erste Momentenpfad ein anders Übersetzungsverhältnis aufweist als der zweite Momentenpfad.

In jeder Übersetzungsstufe erfolgt dabei vorzugsweise eine Untersetzung der Drehzahl des ersten bzw. des zweiten Elektromotors, wobei die Übersetzungsstufen sich dadurch unterscheiden, dass sie die Drehzahl des ersten bzw. des zweiten Elektromotors unterschiedlich stark untersetzen.

Gemäß einer weiteren besonders bevorzugten Ausführungsform der Erfindung ist es vorgesehen, dass die erste Kegelradstufe dazu ausgebildet ist, eine Umlenkung des ersten Momentenpfads um 90° herzustellen und dass die zweite Kegelradstufe dazu ausgebildet ist, eine Umlenkung des zweiten Momentenpfads um 90° herzustellen. Das bedeutet also, dass ein Eingangselement der ersten bzw. der zweiten Kegelradstufe sowie alle Elemente des ersten bzw. zweiten Antriebsstrangs im ersten bzw. zweiten Momentenpfad vor dem Eingangselement der ersten bzw. der zweiten Kegelradstufe rechtwinklig zu einem Ausgangselement der ersten bzw. der zweiten Kegelradstufe sowie zu allen Elementen des ersten bzw. zweiten Antriebsstrangs im ersten bzw. zweiten Momentenpfad nach dem Ausgangselement der ersten bzw. der zweiten Kegelradstufe angeordnet sind. Dies ermöglicht ein besseres Ausnutzen des vorhandenen Bauraums und damit einhergehend eine kompaktere Bauweise der Antriebsachse.

Da somit also der erste Elektromotor im 90°-Winkel zum ersten Abtrieb angeordnet ist und ebenso der zweite Elektromotor im 90°-Winkel zum zweiten Abtrieb angeordnet ist, kann die Baulänge des ersten bzw. zweiten Elektromotors bedarfsweise erhöht werden, ohne dass die Spurbreite der Antriebsachse zunimmt. Dies ermöglicht eine einfache Skalierung der Leistungsanforderungen.

Alternativ bevorzugt können die erste und die zweite Kegelradstufe auch dazu ausgebildet ist, eine Umlenkung des ersten Momentenpfads bzw. des zweiten Momentenpfads um mehr oder weniger als 90° herzustellen. Die Umlenkung muss zudem nicht zwingend in einer Ebene parallel zum Untergrund liegen sondern kann neben einer horizontalen Komponente auch eine Vertikale Komponente umfassen.

Gemäß einer weiteren besonders bevorzugten Ausführungsform der Erfindung ist es vorgesehen, dass der erste Antriebsstrang und der zweite Antriebsstrang symmetrisch um eine Hochachse des Gehäuses angeordnet sind, wobei der erste Elektromotor in Fahrtrichtung der Antriebsachse angeordnet ist und der zweite Elektromotor entgegen der Fahrtrichtung der Antriebsachse angeordnet ist. Diese symmetrische Anordnung erlaubt nicht nur eine konstruktive Vereinfachung der Antriebsachse und eine Verwendung einer Vielzahl von Gleichteilen, sondern auch eine möglichst effiziente Ausnutzung des vorhandenen Bauraums, was ebenfalls zur kompakteren Ausbildung der Antriebsachse beiträgt.

Alternativ bevorzugt kann der erste Elektromotor auch seitlich an der Antriebsachse angeordnet sein und der zweite Elektromotor kann dem ersten Elektromotor gegenüberliegend ebenfalls seitlich an der Achse angeordnet sein. Der erste und der zweite Abtrieb sind dann in Fahrtrichtung bzw. entgegen der Fahrtrichtung ausgerichtet.

Der erste Motor weist dabei in Fahrtrichtung und der erste Abtrieb kann je nach Ausrichtung der ersten Kegelradstufe in Fahrtrichtung links oder rechts angeordnet sein. Der zweite Motor weist entgegen der Fahrtrichtung und der zweite Abtrieb kann je nach Ausrichtung der zweiten Kegelradstufe in Fahrtrichtung links oder rechts angeordnet sein. Der erste Elektromotor liegt also symmetrisch dem zweiten Elektromotor gegenüber und der erste Abtrieb liegt symmetrisch dem zweiten Abtrieb gegenüber. Ebenso liegen sich das erste Getriebe und das zweite Getriebe an der Hochachse gespiegelt symmetrisch gegenüber.

Gemäß einer weiteren besonders bevorzugten Ausführungsform der Erfindung ist es vorgesehen, dass der erste Elektromotor über eine erste Flanschverbindung am Gehäuse angeordnet ist und dass der zweite Elektromotor über eine zweite Flanschverbindung am Gehäuse angeordnet ist. Eine Flanschverbindung ist dabei eine sog. neutrale Verbindung, d.h. eine nicht-proprietäre Verbindung, wodurch das Gehäuse auf einfache Weise mit unterschiedlichen Arten bzw. Ausbildungsformen von ersten und zweiten Elektromotoren koppelbar ist. Aber auch mit anderen Antriebseinheiten als Elektromotoren ist das Gehäuse somit koppelbar, beispielsweise können auch hydraulische Motoren am Gehäuse angeordnet werden, um den ersten Abtrieb und den zweiten Abtrieb anzutreiben. Dies begünstigt die Verwendungsmöglichkeiten der Antriebsachse neben Radfahrzeugen auch in Kettenfahrzeugen, Baumaschinen und anderen Sonderfahrzeugen.

Gemäß einer weiteren besonders bevorzugten Ausführungsform der Erfindung ist es vorgesehen, dass der erste Antriebsstrang weiterhin eine erste Feststellbremse umfasst und dass der zweite Antriebsstrang weiterhin eine zweite Feststellbremse umfasst. Vorteilhaft ist die erste Feststellbremse im ersten Momentenpfad nach dem ersten Planetensatz und vor dem ersten Abtrieb angeordnet. Ebenso ist vorteilhaft auch die zweite Feststellbremse im zweiten Momentenpfad nach dem zweiten Planetensatz und vor dem zweiten Abtrieb angeordnet. Somit kann beispielsweise bei eingelegter Neutralstufe im ersten und zweiten Getriebe ein unbeabsichtigtes Rollen eines die Antriebsachse aufweisenden Fahrzeugs verhindert werden. Insgesamt erhöhen die erste und die zweite Feststellbremse den Funktionsumfang der Antriebsachse und damit deren Nutzwert.

Gemäß einer weiteren besonders bevorzugten Ausführungsform der Erfindung ist es vorgesehen, dass das Gehäuse mehrteilig ausgebildet ist. Die mehrteilige Ausbildung des Gehäuses vereinfacht sowohl die Herstellung des Gehäuses als auch die Montage des ersten und des zweiten Antriebsstrangs im gemeinsamen Gehäuse. Unabhängig von der mehrteiligen Ausbildung des Gehäuses ist vorteilhaft ein gemeinsamer Ölsumpf für den ersten und den zweiten Antriebsstrang im Gehäuse vorgesehen, so dass der erste und der zweite Antriebsstrang einen gemeinsamen Schmierungs- und Kühlungshaushalt aufweisen.

Gemäß einer weiteren besonders bevorzugten Ausführungsform der Erfindung ist es vorgesehen, dass die Antriebsachse lenkbar ausgebildet ist. Beispielsweise können die erste und die zweite Abtriebswelle jeweils ein Gelenk sowie einen Lenkaktuator zum Erzeugen einer Lenkbewegung aufweisen. Dadurch kann ein Fahrzeug ausschließlich mit erfindungsgemäßen Antriebsachsen ausgestattet sein, ohne auf eine weitere, gesonderte Lenkachse angewiesen zu sein. Auch kann eine Vielzahl von erfindungsgemäßen Antriebsachsen hintereinander an einem Fahrzeug angeordnet sein und je nach Position am Fahrzeug einen zu einer Fahrervorgabe passenden Lenkwinkel einstellen, also der Lenkvorgabe an einer Vorderachse durch ein angepasstes Mitlenken folgen. Weiterhin ist es denkbar und bevorzugt, dass eine als Hinterachse verwendete erfindungsgemäße Antriebsachse einen zur Vorderachse gegensinnigen Lenkwinkel einstellt, um eine Drehung des Fahrzeugs auf möglichst engem Raum zu ermöglichen. Im Gegensatz zu einem gegensinnigen Antreiben der Räder unterschiedlicher Fahrzeugseiten kann somit - insbesondere auf Untergrund mit einem hohen Reibwert - ein erhöhter Reifenverschleiß vermiedenen werden.

Die Erfindung betrifft weiterhin ein Nutzfahrzeug, umfassend mindestens eine erfindungsgemäße Antriebsachse. Daraus ergeben sich die bereits beschrieben Vorteile auch für das erfindungsgemäße Nutzfahrzeug.

Bevorzugt handelt es sich bei dem Fahrzeug um eine geländegängige Arbeitsmaschine, einen Kran, einen allradgetriebenen LKW, einen Radpanzer oder ein geländegängiges Sonderfahrzeug.

Nachfolgend wird die Erfindung anhand von in den Figuren dargestellten Ausführungsformen beispielhaft erläutert.

Es zeigt:

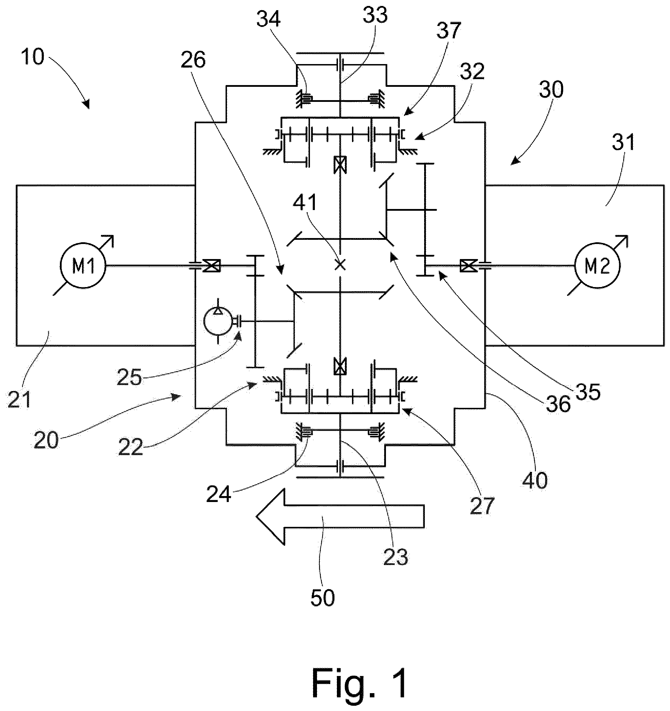

- Fig. 1: beispielhaft und schematisch eine mögliche Ausführungsform einer erfindungsgemäßen elektrisch antreibbaren Antriebsachse für ein geländegängiges Nutzfahrzeug.

Gleiche Gegenstände, Funktionseinheiten und vergleichbare Komponenten sind figurenübergreifend mit den gleichen Bezugszeichen bezeichnet. Diese Gegenstände, Funktionseinheiten und vergleichbaren Komponenten sind hinsichtlich ihrer technischen Merkmale identisch ausgeführt, sofern sich aus der Beschreibung nicht explizit oder implizit etwas anderes ergibt.

Fig. 1 zeigt beispielhaft und schematisch eine mögliche Ausführungsform einer erfindungsgemäßen elektrisch antreibbaren Antriebsachse 10 für ein geländegängiges Nutzfahrzeug, beispielsgemäß für einen Radpanzer.

Die Antriebsachse 10 umfasst einen ersten Antriebsstrang 20 mit einem ersten Elektromotor 21, einem ersten Getriebe 22, einem ersten Abtrieb 23 und einer ersten Feststellbremse 24 sowie einen zweiten Antriebsstrang 30 mit einem zweiten Elektromotor 31, einem zweiten Getriebe 32, einem zweiten Abtrieb 33 und einer zweiten Feststellbremse 34. Der erste Antriebsstrang 20 bildet dabei einen ersten Momentenpfad und der zweite Antriebsstrang 30 bildet einen zweiten Momentenpfad, wobei der erste Momentenpfad vom ersten Elektromotor 21 über das erste Getriebe 22 zum ersten Abtrieb 23 verläuft und der zweite Momentenpfad entsprechend vom zweiten Elektromotor 31 über das zweite Getriebe 32 zum zweiten Abtrieb 33 verläuft.

Das gemeinsame Gehäuse 40 ist beispielsgemäß mehrteilig ausgebildet und weist einen gemeinsamen Ölsumpf für den ersten Antriebsstrang 20 und den zweiten Antriebsstrang 30 auf.

Das erste Getriebe 22 besteht beispielsgemäß aus einer ersten Stirnradstufe 25, einer ersten Kegelradstufe 26 und einem ersten Planetensatz 27. Entsprechend besteht das zweite Getriebe 32 beispielsgemäß aus einer zweiten Stirnradstufe 35, einer zweiten Kegelradstufe 36 und einem zweiten Planetensatz 37.

Mittels der ersten Stirnradstufe 25 wird neben einer Drehzahlreduzierung auch ein erster Höhenversatz des ersten Elektromotors 21 gegenüber dem ersten Abtrieb 23 hergestellt. In analoger Weise wird mittels der zweiten Stirnradstufe 35 neben einer Drehzahlreduzierung auch ein zweiter Höhenversatz des zweiten Elektromotors 31 gegenüber dem zweiten Abtrieb 33 hergestellt.

Der erste Planetensatz 27 und der zweite Planetensatz 37 sind jeweils mehrstufig und unabhängig voneinander schaltbar ausgebildet.

Wie zu sehen ist, sind das erste Getriebe 22 und ein Großteil des ersten Abtriebs 23 im gemeinsamen Gehäuse 40 angeordnet. Lediglich der erste Elektromotor 21 ist über eine Flanschverbindung (nicht dargestellt in Fig. 1) von außen am Gehäuse 40 angeordnet. Eine Abtriebswelle des ersten Abtriebs 23 erstreckt sich ebenfalls aus dem Gehäuse 40. Ebenso sind das zweite Getriebe 32 und ein Großteil des zweiten Abtriebs 33 im gemeinsamen Gehäuse 40 angeordnet. Lediglich der zweite Elektromotor 31 ist über eine Flanschverbindung (nicht dargestellt in Fig. 1) von außen am Gehäuse 40 angeordnet. Eine Abtriebswelle des zweiten Abtriebs 33 erstreckt sich ebenfalls aus dem Gehäuse 40.

Die erste Kegelradstufe 26 ist dazu ausgebildet, eine Umlenkung des ersten Momentenpfads um 90° herzustellen. In entsprechender Weise ist die zweite Kegelradstufe 36 dazu ausgebildet, eine Umlenkung des zweiten Momentenpfads um 90° herzustellen.

Wie ebenfalls zu sehen ist, sind der durch den ersten Antriebsstrang 20 gebildete erste Momentenpfad und der durch den zweiten Antriebsstrang 30 gebildete zweite Momentenpfad mechanisch vollständig voneinander getrennt.

Dabei sind der erste Antriebsstrang 20 und der zweite Antriebsstrang 30 punktsymmetrisch um eine Hochachse 41 des Gehäuses 40 angeordnet. Wie zu sehen ist, ist der erste Elektromotor 21 in Fahrtrichtung (dargestellt durch den Pfeil 50) der Antriebsachse10 angeordnet und der zweite Elektromotor 31 ist entgegen der Fahrtrichtung der Antriebsachse 10 angeordnet.

Die Antriebsachse 10 umfasst somit eine Vielzahl von Funktionen, wie die Mehrstufigkeit des ersten und zweiten Planetensatzes 27, 37, die erste und zweite Feststellbremse 24, 34, getrennte Momentenpfade sowie zwei voneinander unabhängig betreibbare Elektromotoren 21, 31 in einer besonders kompakten Ausbildungsform.

Neben dem Herstellen eines Höhenversatzes führt die erste bzw. zweite Stirnradstufe 25, 35 zu einer Drehzahlreduzierung. Der Höhenversatz wiederum erlaubt es, den ersten bzw. zweiten Elektromotor 21, 31 mit einer größeren Bodenfreiheit am Gehäuse 40 anzuordnen. Ebenso können aber auch Elektromotoren 21, 31 mit vergleichsweise großem Durchmesser verwendet werden.

Die gezeigte Positionierung des ersten bzw. zweiten Planetensatzes 27, 37 und damit die Drehmomenterhöhung am Getriebeausgang reduziert die Belastung der in den Momentenpfaden vorausgehenden Komponenten.

Die erfindungsgemäße Antriebsachse 10 ist dabei so variabel, dass sie flexibel als Antriebsachse in mehrachsigen Nutzfahrzeugen von 4x2 bis 1 0x10 eingesetzt werden kann.

### Bezugszeichen

- 10: Antriebsachse
- 20: erster Antriebsstrang
- 21: erster Elektromotor
- 22: erstes Getriebe
- 23: erster Abtrieb
- 24: erste Feststellbremse
- 25: erste Stirnradstufe
- 26: erste Kegelradstufe
- 27: erster Planetensatz
- 30: zweiter Antriebsstrang
- 31: zweiter Elektromotor
- 32: zweites Getriebe
- 33: zweiter Abtrieb
- 34: zweite Feststellbremse
- 35: zweite Stirnradstufe
- 36: zweite Kegelradstufe
- 37: zweiter Planetensatz
- 40: Gehäuse
- 41: Hochachse
- 50: Pfeil, Fahrtrichtung

## Patentansprüche

1. Elektrisch antreibbare Antriebsachse (10) für ein geländegängiges Nutzfahrzeug, umfassend einen ersten Antriebsstrang (20) mit einem ersten Elektromotor (21), einem ersten Getriebe (22) und einem ersten Abtrieb (23) sowie einen zweiten Antriebsstrang (30) mit einem zweiten Elektromotor (31), einem zweiten Getriebe (32) und einem zweiten Abtrieb (33), wobei der erste Antriebsstrang (20) und der zweite Antriebsstrang (30) in einem gemeinsamen Gehäuse (40) und/oder an dem gemeinsamen Gehäuse (40) angeordnet sind und wobei der erste Antriebsstrang (20) einen ersten Momentenpfad bildet und der zweite Antriebsstrang (30) einen zweiten Momentenpfad bildet,
**dadurch gekennzeichnet, dass** der erste Momentenpfad und der zweite Momentenpfad mechanisch voneinander getrennt sind.

2. Antriebsachse (10) nach Anspruch 1,
**dadurch gekennzeichnet, dass** das erste Getriebe (22) eine erste Stirnradstufe (25), eine erste Kegelradstufe (26) und einen ersten Planetensatz (27) umfasst und
dass das zweite Getriebe (32) eine zweite Stirnradstufe (35), eine zweite Kegelradstufe (36) und einen zweiten Planetensatz (37) umfasst.

3. Antriebsachse (10) nach Anspruch 2,
**dadurch gekennzeichnet, dass** mittels der ersten Stirnradstufe (25) ein erster Höhenversatz des ersten Elektromotors (21) gegenüber dem ersten Abtrieb (23) hergestellt ist und dass mittels der zweiten Stirnradstufe (35) ein zweiter Höhenversatz des zweiten Elektromotors (31) gegenüber dem zweiten Abtrieb (33) hergestellt ist.

4. Antriebsachse (10) nach mindestens einem der Ansprüche 2 und 3,
**dadurch gekennzeichnet, dass** der erste Planetensatz (27) mehrstufig ausgebildet ist und dass der zweite Planetensatz (37) mehrstufig ausgebildet ist.

5. Antriebsachse (10) nach mindestens einem der Ansprüche 2 bis 4,
**dadurch gekennzeichnet, dass** die erste Kegelradstufe (26) dazu ausgebildet ist, eine Umlenkung des ersten Momentenpfads um 90° herzustellen und dass die zweite Kegelradstufe (36) dazu ausgebildet ist, eine Umlenkung des zweiten Momentenpfads um 90° herzustellen.

6. Antriebsachse (10) nach mindestens einem der Ansprüche 1 bis 5,
**dadurch gekennzeichnet, dass** der erste Antriebsstrang (20) und der zweite Antriebsstrang (30) symmetrisch um eine Hochachse (41) des Gehäuses (40) angeordnet sind, wobei der erste Elektromotor (21) in Fahrtrichtung der Antriebsachse (10) angeordnet ist und der zweite Elektromotor (31) entgegen der Fahrtrichtung der Antriebsachse (10) angeordnet ist.

7. Antriebsachse (10) nach Anspruch 6,
**dadurch gekennzeichnet, dass** der erste Elektromotor (21) über eine erste Flanschverbindung am Gehäuse (40) angeordnet ist und dass der zweite Elektromotor (31) über eine zweite Flanschverbindung am Gehäuse (40) angeordnet ist.

8. Antriebsachse (10) nach mindestens einem der Ansprüche 1 bis 7,
**dadurch gekennzeichnet, dass** der erste Antriebsstrang (20) weiterhin eine erste Feststellbremse (24) umfasst und dass der zweite Antriebsstrang (30) weiterhin eine zweite Feststellbremse (34) umfasst.

9. Antriebsachse (10) nach mindestens einem der Ansprüche 1 bis 8,
**dadurch gekennzeichnet, dass** das Gehäuse (40) mehrteilig ausgebildet ist.

10. Antriebsachse (10) nach mindestens einem der Ansprüche 1 bis 9,
**dadurch gekennzeichnet, dass** die Antriebsachse (10) lenkbar ausgebildet ist.

11. Nutzfahrzeug, umfassend mindestens eine Antriebsachse (10) nach mindestens einem der Ansprüche 1 bis 10.
